# EUROPÄISCHE PATENTSCHRIFT

(11) **EP 4 472 860 B1**
(45) Veröffentlichungstag und Bekanntmachung des Hinweises auf die Patenterteilung: **28.01.2026**
(21) Anmeldenummer: 23700478.3
(22) Anmeldetag: 09.01.2023
(51) Int. Cl.: B60L 50/75, B60L 58/40, B60L 7/18, B60L 15/20, B60L 58/18, B60L 58/12, H01M 8/04537, H01M 10/48, H01M 10/42, H01M 8/043, H01M 8/04858, H01M 8/04992, H01M 16/00

(54) **VERFAHREN ZUM BETRIEB EINES NUTZFAHRZEUG-GESPANNS, UND NUTZFAHRZEUG-GESPANN**
OPERATING METHOD OF A WORKING VEHICLE COMBINATION AND WORKING VEHICLE COMBINATION
PROCÉDÉ D'OPÉRATION D'UN ENSEMBLE ATTELÉ DE VÉHICULE UTILITAIRE ET ENSEMBLE ATTELÉ DE VÉHICULE UTILITAIRE

(30) Priorität: 03.02.2022 DE 102022102574
(43) Veröffentlichungstag der Anmeldung: 11.12.2024
(73) Patentinhaber: ZF CV Systems Global GmbH, 3006 Bern (CH)
(72) Erfinder: MÜLLER-DEILE, Felix, 30449 Hannover (DE); RICKE, Janik, 31311 Uetze (DE)
(86) Internationale Anmeldenummer: PCT/EP2023/050271
(87) Internationale Veröffentlichungsnummer: WO 2023/147957

(56) Entgegenhaltungen:
- DE-A1- 102013 014 305
- DE-A1- 102017 011 032
- DE-A1- 102017 109 410
- DE-A1- 102018 124 304
- DE-A1- 102019 130 200
- DE-A1- 102019 202 782
- US-A1- 2016 318 421
- US-A1- 2019 202 429
- US-A1- 2021 188 279

## Beschreibung

Die Erfindung betrifft ein Verfahren zum Betrieb eines Nutzfahrzeug-Gespanns mit einer Zugmaschine, welche eine erste elektrische Maschine, einen damit wirkverbundenen ersten elektrischen Speicher, und ein Brennstoffzellensystem aufweist, das mit dem ersten elektrischen Speicher wirkverbunden und dazu eingerichtet ist, elektrische Energie bei einer Erzeugungsleistung bereitzustellen, sowie mit einem Anhänger, welche eine zweite elektrische Maschine und einen damit wirkverbundenen zweiten elektrischen Speicher aufweist.

Im Betrieb von Nutzfahrzeug-Gespannen der vorbezeichneten Art kommen auf die in den Zugmaschinen eingesetzten Brennstoffzellensysteme regelmäßig Änderungen in den Lastanforderungen zu. Änderungen in den Lastanforderungen werden auch unter dem Oberbegriff einer dynamischen Belastung zusammengefasst. Je dynamischer die Belastung an das Brennstoffzellensystem im Betrieb ist, beispielsweise aufgrund einer Streckentopografie auf der Route des Nutzfahrzeug-Gespanns, desto höher sind auch die dynamischen Anforderungen an die Reaktantenversorgung des Brennstoffzellensystems, beispielsweise an die Luftversorgung. Die einsetzbare Größe von Verdichtern und Verdichteranordnungen in Nutzfahrzeugen ist zum einen bauraumtechnisch begrenzt und zum anderen sind größere Verdichteranordnungen weniger dynamisch als kleinere Verdichteranordnungen. Brennstoffzellensysteme von Nutzfahrzeug-Gespannen benötigen jedoch vergleichsweise große Verdichtersysteme, woraus ein erhöhter Luftbedarf resultiert.

Aufgrund der damit eingeschränkten Dynamik können die Brennstoffzellensysteme in Nutzfahrzeug-Gespannen nicht besonders schnell, d.h. besonders dynamisch auf geänderte Lastanforderungen reagieren. Zudem beeinträchtigt eine dynamische Beanspruchung der Brennstoffzellensysteme die Lebensdauer dieser Systeme.

Trotz stets zunehmender Funktionalität der Brennstoffzellensysteme in Nutzfahrzeugen wird hier ein Bedarf für Verbesserungen gesehen.

Aus DE 10 2014 224 380 A1 ist ein Kühlsystem für eine Brennstoffzellenanlage bekannt, bei der Navigationsinformationen genutzt werden, um den Fahrzyklus zu bestimmen, und daraufhin den Kühlmittelbedarf zu ermitteln.

Aus DE 10 2014 217 780 A1 ist die grundsätzliche Problematik der eingeschränkten dynamischen Belastbarkeit von Brennstoffzellensystemen ebenfalls bekannt. Dort wird vorgeschlagen, dass zukünftig zum Betrieb notwendige Betriebsparameter vorab prognostiziert werden, um eine bevorstehende Lastanforderung besser einschätzen zu können. Lastwechselbewertungen finden durch Fahrer statt, und Umgehungsinformationen, Bergfahrten und Staus können nach dem Vorschlag aus DE 10 2014 217 780 A1 über Navigationssysteme vorhergesagt werden.

Aus DE 10 2017 109 410 A1 ist ein Vorschlag bekannt, nach dem Lade- und Entladeverläufe von elektrischen Energiespeichern aufgezeichnet werden und mittels einer Vorhersageeinheit der künftige Bedarf hieraus ermittelt werden soll.

DE 10 2013 014305 A1 offenbart einen Fahrzeuganhänger für ein Zugfahrzeug, wobei der Fahrzeuganhänger elektrische Antriebskomponenten hat, die mit den Antriebskomponenten des Zugfahrzeugs koppelbar sind.

US 2021/188279 A1 offenbart ein Verfahren zum Betrieb eines Nutzfahrzeug-Gespanns mit elektrischen Antriebskomponenten in Zugmaschine und Anhänger. Dabei wird die Zusammenarbeit der elektrischen Maschinen und Energiespeicher beider Fahrzeuge beschrieben. Das Verfahren umfasst Steuerungsmaßnahmen zur Koordination der Antriebssysteme.

Aus dem Stand der Technik sind verschiedene Ansätze bekannt, die sich auf den verbesserten Betrieb einer Zugmaschine mit Brennstoffzellensystemen im Allgemeinen beziehen. Sie schlagen aber allesamt keine konkrete Lösung vor und sind daher nicht optimal für den tatsächlichen Betrieb von Nutzfahrzeug-Gespannen bestehend aus Zugmaschine und Anhänger mit separatem elektrischem Antrieb.

Dementsprechend lag der vorliegenden Erfindung die Aufgabe zugrunde, ein Verfahren der eingangs bezeichneten Art anzugeben, welches die vorstehend beschriebenen Nachteile weitgehend überwindet. Insbesondere lag der Erfindung die Aufgabe zugrunde, ein Verfahren zum Betrieb eines Nutzfahrzeug-Gespanns der eingangs bezeichneten Art anzugeben, welches einen effizienteren Betrieb des Nutzfahrzeug-Gespanns ermöglicht, ohne die Lebensdauer des Brennstoffzellensystems der Zugmaschine zu beeinträchtigen.

Die Erfindung löst die ihr zugrundeliegende Aufgabe, indem das Verfahren die Schritte gemäß Anspruch 1.

Die Erfindung basiert auf dem Gedanken, dass zum Anpassen der von der Brennstoffzelle bereitzustellenden Erzeugungsleistung die elektrischen Betriebsparameter des Gesamtsystems aus Zugmaschine und Anhänger ermittelt werden, und somit auch der Anhänger Teil des Nutzfahrzeug-Gespanns mit seiner dedizierten elektrischen Maschine und seinem dedizierten Energiespeicher als Teil des Gesamtsystems in die Regelung der Erzeugungsleistung der Brennstoffzelle mit einfließen kann. Der Anhänger und seine elektrischen Leistungskomponenten werden somit für die Regelung des Brennstoffzellensystems der Zugmaschine sichtbar gemacht. Der Anhänger kann mit seiner elektrischen Maschine im Normalbetriebsmodus zusätzliche Antriebsleistung zur Verfügung stellen, und im Rekuperationsmodus zusätzliche Rekuperationsleistung. Um das Potenzial der Kombination aus Zugmaschine und Anhänger voll nutzbar zu machen, folgt die Erfindung dem Ansatz, die Speicherkapazitäten der beiden elektrischen Maschinen und die Leistungsfähigkeit der elektrischen Maschinen gemeinsam zu berücksichtigen, um die von der Brennstoffzelle bereitzustellende Erzeugungsleistung entsprechend anzupassen. Die Regelung erlaubt über die Lebensdauer des Brennstoffzellensystems hinweg eine im Durchschnitt geringere Belastung der Brennstoffzelle und aufgrund der höheren Menge an speicherbarer elektrischer Energie, eine bessere Energiepufferung, weil die Rekuperation verbessert wird und die Anpassung der Erzeugungsleistung eine weniger dynamische Belastung des Brennstoffzellensystems möglich macht.

Die Zugmaschine und der Anhänger können jeweils eine elektrische Maschine oder jeweils mehrere elektrische Maschinen aufweisen, genauso wie sie jeweils eine oder mehrere elektrische Speicher aufweisen können. Für das Verfahren gilt selbstverständlich, dass das Ermitteln von Betriebsparametern bei Verwendung mehrerer elektrischer Maschinen und/oder elektrischer Speicher für eine, mehrere oder sämtliche der elektrischen Maschinen und/oder elektrischen Speicher durchgeführt werden kann.

Das Ermitteln kann in bevorzugten Ausführungsformen das Auslesen von fest hinterlegten Informationen oder Daten umfassen, und/oder das Erfassen von Zustandsgrößen aus dem laufenden Betrieb der elektrischen Maschine(n) bzw. Speicher.

Wenn im Zusammenhang mit der Erfindung von einem Brennstoffzellensystem gesprochen wird, so wird hierunter verstanden, dass das Brennstoffzellensystem eine Brennstoffzelle aufweist, die dazu eingerichtet ist, bei einem veränderlichen Arbeitspunkt betrieben zu werden, wobei der Arbeitspunkt als Funktion eines, mehrerer der vorstehend beschriebenen Betriebsparameter eingestellt wird, vorzugsweise von einer Brennstoffzellensteuerung.

Die Brennstoffzellensteuerung ist Teil einer übergeordneten Fahrzeugsteuerung, welche neben der Brennstoffzellensteuerung ein oder mehrere weitere Steuergeräte aufweisen kann, in bevorzugten Ausführungsformen etwa eine, mehrere oder sämtliche der Folgenden: Batteriemanagementsystem, Zugmaschinen-Bremssteuergerät, und/oder Anhänger-Bremssteuergerät.

Die Fahrzeugsteuerung kann als zentrale rechnergestützte Brennstoffzellensteuerung ausgebildet sein und die vorgenannten Geräte als hardware- oder softwaremäßig integrierte Komponenten aufweisen oder in Form mehrerer dedizierter Steuergeräte ausgebildet sein, welche gemeinsam das erfindungsgemäße Verfahren ausüben und hierzu mit den korrespondierenden Prozessoren, Datenspeichern und programmierten Steuerbefehlen versehen sind.

Das Verfahren weist zwei charakteristische Betriebsphasen auf, einen Normalbetriebsmodus, in dem die elektrischen Maschinen als Elektromotoren zum Antrieb des Nutzfahrzeug-Gespanns angesteuert werden, und einen Rekuperationsmodus, in dem die elektrischen Maschinen als Generatoren zum regenerativen Bremsen angesteuert werden. Mit anderen Worten umfasst das Verfahren zu bestimmten Zeiten auch die Schritte:
- Bereitstellen elektrischer Energie bei einer Erzeugungsleistung mittels des Brennstoffzellensystems, sowie wahlweise
   a) Antreiben des Nutzfahrzeug-Gespanns in einem Normalbetriebsmodus unter Entnahme elektrischer Energie bei einer Antriebsleistung aus dem ersten und/oder zweiten elektrischen Speicher, und/oder
   b) Bereitstellen elektrischer Energie bei einer Rekuperationsleistung mittels der ersten und/oder zweiten elektrischen Maschine, und Zuführen der Energie zu dem ersten und/oder zweiten elektrischen Speicher in einem Rekuperationsmodus.

In einer bevorzugten Weiterbildung der Erfindung umfassen die Betriebsparameter eines, mehrere oder sämtliche der folgenden:
i) Gesamtkapazität des ersten und zweiten elektrischen Speichers,
ii) Gesamtladestand des ersten und zweiten elektrischen Speichers,
iii) Gesamtantriebsleistung der ersten und zweiten elektrischen Maschine,
iv) Gesamtrekuperationsleistung der ersten und zweiten elektrischen Maschine,
v) maximale Antriebsleistung der ersten elektrischen Maschine,
vi) maximale Antriebsleistung der zweiten elektrischen Maschine,
vii) maximale (erste) Rekuperationsleistung der ersten elektrischen Maschine,
iix) maximale (zweite) Rekuperationsleistung der zweiten elektrischen Maschine,
ix) maximale (erste) Ladeleistung des ersten elektrischen Speichers,
x) maximale (zweite) Ladeleistung des zweiten elektrischen Speichers,
xi) maximale (erste) Bremsleistung der ersten elektrischen Maschine, und/oder
xii) maximale (zweite) Bremsleistung der zweiten elektrischen Maschine.

Die maximale Rekuperationsleistung wird durch die Leistungsfähigkeit der elektrischen Maschinen einerseits und durch die maximale Ladeleistung der jeweiligen Batterien andererseits begrenzt. Ist beispielsweise in der Zugmaschine eine elektrische Maschine mit maximal 450 kW Leistung vorhanden, können in der Regel auch nicht mehr als jene 450 kW an Rekuperationsleistung bereitgestellt werden. Eine analoge Betrachtung ist für die elektrischen Maschinen im Anhänger zu sehen. Ist dort beispielsweise eine elektrische Maschine mit einer maximalen Leistung von 250 kW vorgesehen, kann dort auch nur eine entsprechend maximale Rekuperationsleistung erreicht werden.

Die maximale Bremsleistung der elektrischen Maschinen des Nutzfahrzeug-Gespanns ist vorzugsweise in der Fahrzeugsteuerung, insbesondere in der Brennstoffzellensteuerung hinterlegt.

Vorzugsweise ist für den Anhänger ein Satz an Informationselementen vorgesehen, beispielsweise ebenfalls in der Fahrzeugsteuerung, und/oder an bzw. in der Zugmaschine, anhand derer für die Fahrzeugsteuerung, insbesondere für die Brennstoffzellensteuerung, ersichtlich ist, was für ein Anhänger an die Zugmaschine angehängt ist, und vor allem, was für eine elektrische Maschine und was für ein elektrischer Speicher damit durch den Anhänger bereitgestellt werden.

Vorzugsweise wird die verfügbare Bremsleistung aus dem von den elektrischen Maschinen maximal bereitstellbarem Motormoment bei der jeweils aktuellen Motordrehzahl ermittelt. Diese Information kann beispielsweise über ein BUSSystem übermittelt werden.

Die maximal mögliche Rekuperationsleistung kann beispielsweise zusätzlich durch die Energiespeicher begrenzt sein. Es kann nicht mehr Rekuperationsleistung zugeführt werden, als die elektrischen Speicher an Ladeleistung maximal vertragen. Die maximal mögliche Ladeleistung der Energiespeicher ist abhängig von dem jeweiligen aktuellen Ladestand und weiteren konstruktionsspezifischen Batteriegrößen wie beispielsweise der Laderate (C-Rate), dem Innenwiderstand der Zellen innerhalb der Energiespeicher etc..

Die Gesamtkapazität der Energiespeicher und die Leistungswerte der elektrischen Maschinen, insbesondere des Anhängers, können beispielsweise über am Anhänger angebrachte kodierte Informationen, beispielsweise Barcodes, etc. ermittelt werden.

In einer bevorzugten Ausführungsform erfolgt das Anpassen der Erzeugungsleistung zusätzlich gemäß einer Betriebsstrategie, wobei die Betriebsstrategie einen zeitlichen Verlauf aufweist. Vorzugsweise weist die Betriebsstrategie entlang des zeitlichen Verlaufs eine Vorhersage der Antriebsleistung und/oder der bereitgestellten Rekuperationsleistung auf. Die Vorhersage kann also beispielsweise zukünftige Änderungen der Antriebsleistungen der ersten und/oder zweiten elektrischen Maschinen, der Gesamtantriebsleistung, der Rekuperationsleistungen der ersten und/oder zweiten elektrischen Maschinen, und/oder der Gesamtrekuperationsleistung umfassen.

In einer weiteren bevorzugten Ausführungsform weist die Betriebsstrategie entlang des zeitlichen Verlaufs eine Vorhersage der Ladestände des ersten und/oder zweiten elektrischen Speichers auf, insbesondere eine Vorhersage über entlang des zeitlichen Verlaufs auftretende Veränderungen des Ladestands des ersten und/oder zweiten elektrischen Speichers.

In einer weiteren bevorzugten Ausführungsform umfassend das Verfahren die die Schritte: Ermitteln von Streckeninformationen entlang des zeitlichen Verlaufs, und Anpassen der Erzeugungsleistung zusätzlich in Abhängigkeit der ermittelten Streckeninformationen. Die Streckeninformationen können über vorgegebene Streckenverläufe ermittelt werden, welche beispielsweise aus einem Flottenmanagementsystem oder aus einem topografischen Tempomaten ausgelesen werden kann. Aus den Streckeninformationen kann von der Fahrzeugsteuerung für das Nutzfahrzeug-Gespann, beispielsweise mittels der Brennstoffzellensteuerung, der Energiebedarf über den gesamten Streckenverlauf ermittelt werden. Kennzeichen der Erfindung ist in diesem Aspekt, dass der Anhänger durch das zusätzliche Bereitstellen der Antriebsleistung und das zusätzliche Abschöpfen von Energie im Rekuperationsmodus die Zugmaschine deutlich unterstützen kann. Hierdurch wird die benötigte Erzeugungsleistung, die das Brennstoffzellensystem bereitstellen muss, gesenkt. Würde man einen Anhänger mit eigenem Energiespeicher und eigener elektrischer Maschine an eine konventionelle Zugmaschine mit Verbrennungsmotor anhängen, würde sich dort aufgrund der zusätzlichen Antriebs- und Rekuperationsleistung des Anhängers ebenfalls ein reduzierter Kraftstoffverbrauch an der Zugmaschine einstellen, allerdings lediglich aufgrund des mechanischen Effekts, dass der Anhänger die Zugmaschine beim Antrieb und beim Rekuperieren unterstützt.

Das Brennstoffzellensystem arbeitet im Unterschied zu Verbrennungskraftmotoren aber grundsätzlich unabhängig von mechanischen Einflüssen auf die Zugmaschine, sondern allein auf Basis der Betriebsparameter der Brennstoffzelle.

Dadurch, dass erfindungsgemäß die Betriebsparameter des Gesamtsystems und optional zusätzlich Betriebsparameter aus den Streckeninformationen verwertet werden, kann das Brennstoffzellensystem auf jeden spezifischen Anhänger, der eine eigene elektrische Maschine und einen eigenen elektrischen Speicher mitbringt, angemessen reagieren und die Menge der von ihr bereitgestellten Erzeugungsleistung entsprechend anpassen, d.h. in der Regel heruntersetzen. Das führt langfristig zu einem besseren Wirkungsgrad des Brennstoffzellensystems, das bei niedrigeren Arbeitspunkten effizienter betrieben kann als höheren Arbeitspunkten. Durch die prädiktive Berücksichtigung der Streckeninformationen kann beispielsweise die Zugmaschine das Brennstoffzellensystem bei einer Bergauffahrt früher herunterregeln, mit dem Wissen, dass es im Anschluss an die Bergauffahrt über eine längere Strecke bergab geht und dort, im Rekuperationsmodus sowohl von der ersten als auch von der zweiten elektrischen Maschine elektrische Energie bereitgestellt und in die elektrischen Speicher überführt werden kann, was zu einer Entlastung des Brennstoffzellensystems führt.

In einer weiteren bevorzugten Ausführungsform erfolgt das Ermitteln der Betriebsparameter:
Gesamtkapazität, Gesamtladestand, und/oder maximal mögliche Ladeleistung des ersten und/oder zweiten elektrischen Speichers,
mittels Abfrage eines Batteriemanagementsystems des Fahrzeugs, und die Betriebsparameter werden an die Brennstoffzellensteuerung des Brennstoffzellensystems übertragen. Die Übertragung kann über ein BUSSystem des Nutzfahrzeugs, beispielsweise einen CAN-BUS erfolgen. Auch eine Übertragung per drahtloser Kommunikation, beispielsweise per Funkübertragung, zwischen einer Brennstoffzellensteuerung und dem Batteriemanagementsystem ist in bevorzugten Ausführungsformen vorgesehen. Eine Übertragung per drahtloser Verbindung kann beispielsweise über Bluetooth-Verbindungen, ISM-Verbindungen oder SRD-Verbindungen erfolgen. Alternativ kann eine drahtlose Übertragung über Netzwerkübertragungsstandards wie beispielsweise WLAN erfolgen.

In weiteren bevorzugten Ausführungsformen wird der Anhänger über eine dedizierte kabelgebundene LAN-Leitung, sogenanntes Automotive Ethernet, mit der Zugmaschine verbunden, und die Daten der Betriebsparameter können über diese Leitung an die Zugmaschine und optional dort die Brennstoffzellensteuerung übertragen werden.

Das Batteriemanagementsystem ist in bevorzugten Ausführungsformen in die Zugmaschine bzw. deren elektronische Bremsensteuerung integriert, oder in eine elektronische Bremsensteuerung des Anhängers. Die elektronischen Bremssysteme der Zugmaschine und des Anhängers kommunizieren bei der Regelung der Bremsung des Gesamtsystems miteinander und koordinieren vorzugsweise sowohl das regenerative Bremsen durch die elektrischen Maschinen im Rekuperationsmodus als auch das Aktiveren der Reibbremsen, oder den Betrieb von Retardern.

In einer weiteren bevorzugten Ausführungsform erfolgt das Ermitteln der Betriebsparameter:
Gesamtkapazität des ersten und zweiten elektrischen Speichers, maximale Antriebsleistung der ersten und/oder zweiten elektrischen Maschine, und/oder maximale Rekuperationsleistung der ersten und/oder zweiten elektrischen Maschine
mittels Auslesen von Informationselementen am Fahrzeug-Gespann, insbesondere von einem oder mehreren Barcodes.

**In** einer weiteren bevorzugten Ausführungsform wird die Gesamtkapazität des ersten und zweiten elektrischen Speichers, und/oder die Gesamtrekuperationsleistung der ersten und zweiten elektrischen Maschine von der Brennstoffzellensteuerung berechnet, oder von einem Trailer- oder Zugmaschinen-Bremssteuergerät berechnet und mittels Datenübertragung an die Brennstoffzellensteuerung übermittelt.

**In** einer weiteren bevorzugten Ausführungsform, die zugleich ein zweiter, unabhängiger Aspekt der Erfindung ist, umfasst das Verfahren, vorzugsweise zusätzlich zu den vorstehend beschriebenen, bevorzugten Ausführungsformen, oder in Alleinstellung, die folgenden Schritte:
- Wechseln von dem Normalbetriebsmodus in den Rekuperationsmodus zu einem Umschaltzeitpunkt, und
- Herunterfahren der Erzeugungsleistung des Brennstoffzellensystems, vor dem Umschaltzeitpunkt, in dem Umschaltzeitpunkt oder innerhalb einer vorbestimmten (ersten) Verzögerungsdauer nach dem Umschaltzeitpunkt.

Die erste Verzögerungsdauer liegt vorzugsweise einem Bereich von 3,0 Sekunden oder weniger, weiter vorzugsweise 2,0 Sekunden oder weniger.

**In** diesem Aspekt der Erfindung wird vor allem die Anpassung der vom Brennstoffzellensystem bereitgestellten Erzeugungsleistung in dem Rekuperationsmodus adressiert. Aufgrund der eingangs angesprochenen begrenzten Dynamik im Betrieb der Brennstoffzellensysteme können diese nicht schlagartig von einem Arbeitspunkt im laufenden Betrieb auf ein niedrigeres Leistungsniveau heruntergesetzt werden, oder ausgeschaltet werden, ohne Beschädigungen der Brennstoffzellensysteme in Kauf zu nehmen. Stattdessen ist ein Herunterfahren der Erzeugungsleistung über einen bestimmten Zeitraum notwendig, um Beschädigungen zu vermeiden. **In** dem Zeitpunkt, wo also von einem Normalbetriebsmodus in einen Rekuperationsmodus umgeschaltet wird, beispielsweise bei Eintreten eines Bremsbefehls, oder beim Beginn einer im Rahmen der Betriebsstrategie vorab definierten Gefällestrecke, wird in der Regel zu Beginn der Rekuperation sowohl von den elektrischen Maschinen die rekuperierte Energie in Richtung der elektrischen Speicher übertragen, als auch nach wie vor vom Brennstoffzellensystem.

Die maximale Ladeleistung der elektrischen Speicher ist aber, wie vorstehend ausgeführt, begrenzt. Es kann nicht beliebig viel elektrische Energie pro Zeiteinheit von den elektrischen Speichern aufgenommen werden. Bestimmt wird diese maximale Ladeleistung unter anderem durch die Laderate, auch als C-Rate bezeichnet. Ein Teil der maximal möglichen Ladeleistung für einen elektrischen Speicher wird durch die von der Brennstoffzelle bereitgestellte Erzeugungsleistung "belegt", sodass mitunter von den elektrischen Maschinen nicht deren eigentliche volle Rekuperationsleistung in die elektrischen Speicher eingespeist werden kann. Hier setzt die Erfindung in diesem zweiten Aspekt an, indem sie systematisch ein Herunterfahren der Erzeugungsleistung aus dem Brennstoffzellensystem vorschlägt, wenn das Fahrzeug im Umschaltzeitpunkt vom Normalbetriebsmodus in den Rekuperationsmodus wechselt.

Im Rahmen der Betriebsstrategie ist es auch bevorzugt, wenn die Brennstoffzelle bereits vor dem Umschaltzeitpunkt, sofern im Rahmen der Betriebsstrategie bekannt, mit dem Herunterfahren der bereitgestellten Erzeugungsleistung durch die Brennstoffzelle beginnt. Je früher dieser Schritt des Herunterfahrens eingeleitet wird, desto eher kann das volle Rekuperationspotenzial der elektrischen Maschinen im Rekuperationsmodus ausgeschöpft werden.

Bei Umschaltzeitpunkten, die nicht vorherbestimmt sind, sondern aufgrund akut eintretender Bremswünsche durch den Fahrer oder ein elektronisches Bremssystem, wird vorzugsweise dieser mit dem Bremsbefehl zusammenfallende Umschaltzeitpunkt als Trigger für das Herunterfahren der Erzeugungsleistung genutzt. Der Anteil, zu welchem das Brennstoffzellensystem die maximale Ladeleistung des elektrischen Speichers belegt, wird somit gezielt reduziert, damit auch die erste elektrische Maschine, und damit das Nutzfahrzeug-Gespann insgesamt, das volle Rekuperationspotenzial ausschöpfen kann.

Damit möglichst viel Spielraum und möglichst viel Zeit zum Herunterfahren der Brennstoffzelle zur Verfügung steht, ist in seiner bevorzugten Ausführungsform die Betriebsstrategie so eingestellt, dass zum Umschaltzeitpunkt bereits freie Kapazität im ersten elektrischen Speicher und/oder im zweiten elektrischen Speicher vorhanden ist, deren Ladestand also unterhalb der jeweiligen Gesamtkapazität der elektrischen Speicher liegt, und zwar bereits zum Umschaltzeitpunkt.

In einer bevorzugten Ausführungsform wird ab dem Umschaltzeitpunkt zunächst nur mit der zweiten elektrischen Maschine Rekuperationsleistung bereitgestellt, insbesondere dem zweiten elektrischen Speicher zugeführt, und erst im Anschluss daran wird mit der ersten elektrischen Maschine Rekuperationsleistung bereitgestellt, und insbesondere dem ersten elektrischen Speicher zugeführt. Indem die Rekuperation durch die elektrischen Maschinen kaskadiert wird, und zunächst ausschließlich die zweite elektrische Maschine des Anhängers im Rekuperationsmodus zum regenerativen Bremsen eingesetzt wird, kann das Brennstoffzellensystem zum Entlasten der elektrischen Speicher, und insbesondere des ersten elektrischen Speichers, schonend heruntergefahren werden, bevor mit der Rekuperation durch die erste elektrische Maschine begonnen wird. Tritt dann der Fall ein, dass zusätzlich zum Anhänger auch die Zugmaschine mit der elektrischen Maschine beginnt, die rekuperierte Energie in den ersten elektrischen Speicher zu überführen, ist die von dem Brennstoffzellensystem bereitgestellte Erzeugungsleistung schon ein ganzes Stück weit abgesunken, so dass weniger "Bandbreite" der maximal von der Batterie aufnehmbaren Ladeleistung durch die Erzeugungsleistung belegt wird, und mit einer höheren Rekuperationsleistung eingespeist werden kann.

Grundsätzlich gilt, je früher mit dem Herunterfahren der Ladeleistung des Brennstoffzellensystems begonnen wird, desto größer sind die Rekuperationspotenziale der beiden elektrischen Maschinen im Rekuperationsmodus und desto mehr Zeit steht zum Herunterfahren der Erzeugungsleistung des Brennstoffzellensystems zur Verfügung, was dessen Lebensdauer positiv beeinflusst.

In bevorzugten Ausführungsformen liegt die zweite Verzögerungsdauer, also der Zeitraum ab dem Umschaltzeitpunkt, in welchem zunächst nur mit der zweiten, vorzugsweise dem Anhänger zugeordneten, elektrischen Maschine Rekuperationsleistung bereitgestellt wird in einem Bereich von bis zu 5 Sekunden, weiter vorzugsweise in einem Bereich von bis zu 2 Sekunden.

In weiter bevorzugten Ausführungsformen liegt der Zeitraum im Bereich von einer oder mehr Sekunden vor dem Umschaltzeitpunkt.

In einer weiteren bevorzugten Ausführungsform weist das Fahrzeuggespann einen Retarder auf, und es wird im Rekuperationsmodus ab dem Umschaltzeitpunkt zunächst nur mit der ersten und/oder zweiten elektrischen Maschine Rekuperationsleistung bereitgestellt, wie beispielsweise in den obig beschriebenen bevorzugten Ausführungsformen, insbesondere solange, bis der Ladestand des ersten und/oder zweiten elektrischen Speichers einen vorbestimmten Wert, etwa seine jeweilige maximale Kapazität, erreicht hat, und erst im Anschluss wird der Retarder betätigt. Ist dann noch weitere Bremsenergie aufzubringen, weil die bis dato aufgebrachte Bremsleistung nicht ausreicht, kann zusätzlich mit der Reibbremse des Fahrzeug-Gespanns weiter verzögert werden.

Die Erfindung ist vorstehend unter Bezugnahme auf das erfindungsgemäße Verfahren beschrieben worden. In einem weiteren Aspekt betrifft die Erfindung ferner ein Nutzfahrzeug-Gespann, mit einer Zugmaschine, welche eine erste elektrische Maschine und einen damit wirkverbundenen ersten elektrischen Speicher sowie ein mit dem ersten elektrischen Speicher verbundenes Brennstoffzellensystem, das dazu eingerichtet ist, dem ersten elektrischen Speicher elektrische Energie bei einer Erzeugungsleistung bereitzustellen.

Die Erfindung löst die ihr zugrunde liegende Aufgabe bei einem solchen Nutzfahrzeug-Gespann, indem die ersten und/oder zweiten elektrischen Maschinen dazu eingerichtet sind, das Nutzfahrzeug-Gespann in einem Normalbetriebsmodus unter Entnahme elektrischer Energie bei einer Antriebsleistung aus den ersten und/oder zweiten elektrischen Speichern anzutreiben, und/oder in einem Rekuperationsmodus elektrische Energie bei einer Rekuperationsleistung bereitzustellen und dem ersten und/oder zweiten elektrischen Speicher zuzuführen, und wobei das Nutzfahrzeug-Gespann eine Fahrzeugsteuerung aufweist, die signalleitend mit den elektrischen Maschinen und den elektrischen Speichern verbunden und dazu eingerichtet ist, das Verfahren nach einer der vorstehend beschriebenen bevorzugten Ausführungsformen auszuführen.

Insbesondere weist die Fahrzeugsteuerung eine Brennstoffzellensteuerung auf, wobei die Brennstoffzellensteuerung dazu eingerichtet ist, das Brennstoffzellensystem zur Bereitstellung der Erzeugungsleistung anzusteuern, wobei die Fahrzeugsteuerung dazu eingerichtet ist,
a) die elektrischen Maschinen zum Antrieb des Nutzfahrzeug-Gespanns in einem Normalbetriebsmodus unter Entnahme elektrischer Energie aus den elektrischen Speichern anzusteuern, oder
b) die elektrischen Maschinen zur Bereitstellung elektrischer Energie bei einer Rekuperationsleistung und zum Zuführen der Energie zu den elektrischen Speichern in einem Rekuperationsmodus anzusteuern; und die Brennstoffzellensteuerung dazu eingerichtet ist, Betriebsparameter der ersten und zweiten elektrischen Maschinen und/oder Betriebsparameter der ersten und zweiten elektrischen Speicher zu ermitteln; und das Brennstoffzellensystem zur Anpassung der Erzeugungsleistung als Funktion eines, mehrerer oder sämtlicher der ermittelten Betriebsparameter anzusteuern.

Das Nutzfahrzeug-Gespann macht sich die gleichen Vorteile zunutze wie das vorstehend beschriebene erfindungsgemäße Verfahren. Die bevorzugten Ausführungsformen des Verfahrens sind zugleich bevorzugte Ausführungsformen des Nutzfahrzeug-Gespanns und umgekehrt, weswegen zur Vermeidung von Wiederholungen auf die obigen Ausführungen verwiesen wird.

Die Erfindung wird im Folgenden unter Bezugnahme auf die beigefügten Figuren anhand eines bevorzugten Ausführungsbeispiels näher beschrieben. Hierbei zeigen:
- Fig. 1: eine schematische Darstellung eines Nutzfahrzeug-Gespanns gemäß einem bevorzugten Ausführungsbeispiel,
- Fig. 2: einen diagrammatischen Verfahrensablauf nach dem Stand der Technik für den Betrieb eines Nutzfahrzeug-Gespanns, und
- Fig. 3-6: verschiedene diagrammatische Verfahrensabläufe des erfindungsgemäßen Verfahrens.

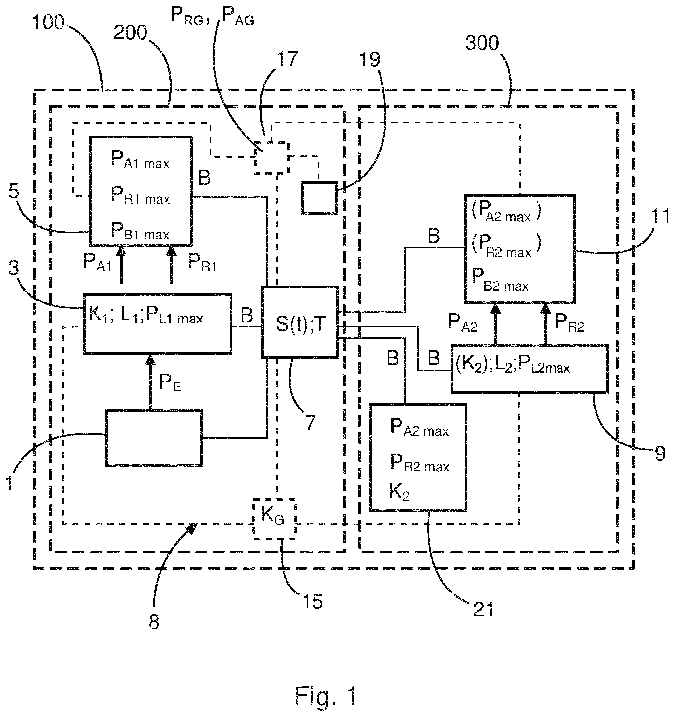

In Fig. 1 ist der schematische grundsätzliche Aufbau eines Nutzfahrzeug-Gespanns 100 dargestellt. Das Nutzfahrzeug-Gespann 100 weist eine Zugmaschine 200 und einen Anhänger 300 auf.

Die Zugmaschine 200 weist ein Brennstoffzellensystem 1 auf, das dazu eingerichtet ist, elektrische Energie bei einer Erzeugungsleistung PE bereitzustellen.

Die Zugmaschine 200 weist ferner einen ersten elektrischen Speicher 3 auf, der mit dem Brennstoffzellensystem 1 wirkverbunden ist und dazu eingerichtet ist, die von dem Brennstoffzellensystem 1 bereitgestellte Erzeugungsleistung P_{E} zwischenzuspeichern.

Die Zugmaschine 200 weist ferner mindestens eine erste elektrische Maschine 5 auf, die mit dem ersten elektrischen Speicher 3 wirkverbunden ist. Die mindestens eine erste elektrische Maschine 5 ist dazu eingerichtet, in einem Normalbetriebsmodus N unter Entnahme elektrischer Antriebsenergie bei einer ersten Antriebsleistung P_{A1} aus dem ersten elektrischen Speicher 3 die Zugmaschine 200 anzutreiben, und in einem Rekuperationsmodus R, beim sogenannten regenerativen Bremsen, elektrische Rekuperationsenergie bei einer Rekuperationsleistung P_{R1} der bewegten Zugmaschine 200 rückzugewinnen und dem ersten elektrischen Speicher 3 zuzuführen.

Die Zugmaschine 200 weist eine Fahrzeugsteuerung 8 auf, die dazu eingerichtet ist, die elektronischen Komponenten des Nutzfahrzeug-Gespanns 100 zu dessen Betrieb anzusteuern. Die Fahrzeugsteuerung 8 weist vorzugsweise mehrere Steuergeräte auf, darunter eine Brennstoffzellensteuerung 7, welche zur Ansteuerung des Brennstoffzellensystems 1 eingerichtet ist. Die Brennstoffzellensteuerung 7 ist hier als separate Einheit abgebildet, könnte aber auch baulich in eine andere Komponente, insbesondere das Brennstoffzellensystem 1, integriert sein. Die Brennstoffzellensteuerung 7 ist dazu eingerichtet, die Menge der vom Brennstoffzellensystem 1 bereitgestellten Erzeugungsleistung P_{E} durch Ansteuerung des Brennstoffzellensystems 1 anzupassen.

Das Nutzfahrzeug-Gespann 100 weist zusätzlich zu dem in der Zugmaschine 200 angeordneten ersten elektrischen Speicher 3 wenigstens einen zweiten elektrischen Speicher 9 auf, welcher dem Anhänger 300 zugeordnet ist. Ferner weist der Anhänger 300 mindestens eine zweite elektrische Maschine 11 auf, die mit dem zweiten elektrischen Speicher 9 wirkverbunden ist.

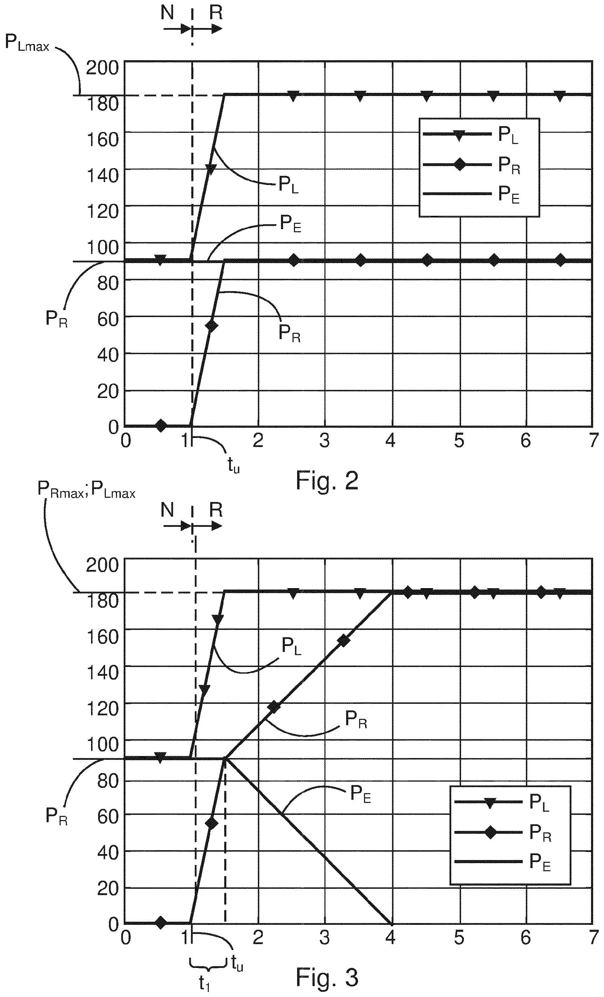

Die zweite elektrische Maschine 11 ist dazu eingerichtet, in einem Normalbetriebsmodus N, vgl. Fig. 2 bis 6, unter Entnahme elektrischer Energie bei einer Antriebsleistung P_{A2} den Anhänger 300 anzutreiben, und in einem Rekuperationsmodus R, vgl. Fig. 2 bis 6, elektrische Energie bei einer Rekuperationsleistung P_{R2} aus dem bewegten Anhänger 300 rückzugewinnen und dem zweiten elektrischen Speicher 9 zuzuführen.

Im gekoppelten Zustand der Zugmaschine 200 und des Anhängers 300 wird das Nutzfahrzeug-Gespann 100 wenigstens zeitweise im Normalbetriebsmodus N sowohl von der ersten elektrischen Maschine 5 als auch von der zweiten elektrischen Maschine 11 angetrieben. Hierzu steht eine Gesamtantriebsleistung P_{AG}=P_{A1}+P_{A2} zur Verfügung. Im Rekuperationsmodus R kann analog sowohl von der ersten elektrischen Maschine 5 als auch von der zweiten elektrischen Maschine 11 Energie rückgewonnen werden, mit einer Gesamtrekuperationsleistung P_{RG}= P_{R1}+P_{R2}, wobei P_{R1} von der Zugmaschine 200 beigesteuert wird und P_{R2} vom Anhänger 300.

Die Brennstoffzellensteuerung 7 ist signalleitend mit den elektrischen Speichern 3, 9 und mit den elektrischen Maschinen 5, 11 verbunden und dazu eingerichtet, repräsentative Daten für elektrische Betriebsparameter B der elektrischen Speicher 3, 9 und/oder der elektrischen Maschinen 5, 11 zu empfangen. Zu diesen Betriebsparametern gehören eine Kapazität K₁ des ersten elektrischen Speichers 3, eine Kapazität K₂ des zweiten elektrischen Speichers 9, ein Ladestand L₁ des ersten elektrischen Speichers 3, ein Ladestand L₂ des zweiten elektrischen Speichers 9, die Antriebsleistungen P_{A1} und P_{A2} der elektrischen Maschinen 5, 11, die Rekuperationsleistungen P_{R1}, P_{R2} der elektrischen Maschinen 5, 11, maximale Antriebsleistungen P_{A1max} und P_{A2max}, maximale Rekuperationsleistungen P_{R1max} und P_{R2max} der elektrischen Maschinen 5, 11, maximale Ladeleistungen P_{L1max}, P_{L2max} der elektrischen Speicher 3 und 9 und/oder die maximalen Bremsleistungen P_{B1max}, P_{B2max} der elektrischen Maschinen 5, 11.

Die Fahrzeugsteuerung 8 weist vorzugsweise ferner eine Bremssteuerung 17 auf, die ihrerseits mehrere nicht einzeln dargestellte Steuergeräte aufweisen kann, etwa ein der Zugmaschine 200 zugeordnetes Zugmaschinenbremssteuergerät (EBS) und ein dem Anhänger 300 zugeordnetes Anhängerbremssteuergerät (TEBS). Es ist zum besseren Verständnis der Erfindung exemplarisch nur Bremssteuergerät 17 in Figur 1 dargestellt, Die Fahrzeugsteuerung 8 ist dazu eingerichtet, die elektrischen Maschinen 5, 11 im Normalbetriebsmodus N zum Antrieb des Nutzfahrzeug-Gespanns 100 anzusteuern und im Rekuperationsmodus R zum Erzeugen von elektrischer Energie bei einer Rekuperationsleistung P_{R1} bzw. P_{R2} anzusteuern und hierzu beispielsweise die Bremssteuerung 17 zu nutzen.

Vor allem ist die Brennstoffzellensteuerung 7 dazu eingerichtet, als Funktion der ermittelten elektrischen Betriebsparameter B das Brennstoffzellensystem 1 derart anzusteuern, dass die Erzeugungsleistung P_{E} in Abhängigkeit von der ermittelten Betriebsparameter B angepasst wird.

Die Brennstoffzellensteuerung 7 kann zur Ermittlung der elektrischen Betriebsparameter B unmittelbar mit den elektrischen Speichern 3, 9 signalleitend verbunden sein, sowie alternativ oder zusätzlich signalleitend mit einem Batteriemanagementsystem 15, welches Teil der Fahrzeugsteuerung 8 ist, und seinerseits signalleitend mit den elektrischen Speichern 3, 9 verbunden und dazu eingerichtet ist, die einzelnen Betriebsparameter B von den elektrischen Speichern 3, 9 zu empfangen, und entweder einzeln oder miteinander zu verrechnen und an die Brennstoffzellensteuerung 7 zu übertragen.

Optional weist das Nutzfahrzeug-Gespann 100 einen oder mehrere Retarder 19 auf, und die Fahrzeugsteuerung 8 ist dazu eingerichtet, diesen zum Ausführen einer Dauerbremsfunktion anzusteuern, beispielsweise angesteuert durch die Bremssteuerung 17.

Im Betrieb des Nutzfahrzeug-Gespanns 100 kommt das vorstehend allgemeiner beschriebene erfindungsgemäße Verfahren zum Einsatz. In einem exemplarischen Betriebsablauf wird das Nutzfahrzeug-Gespann 100 in einem Normalbetriebsmodus N bewegt. Das Brennstoffzellensystem 1 erzeugt elektrische Energie bei einer Erzeugungsleistung P_{E}. Die mit der Erzeugungsleistung P_{E} bereitgestellte Energie wird in dem ersten elektrischen Speicher 3 zwischengespeichert, sodass dieser auf einem Ladestand L1 steht, welcher gleich oder kleiner als die maximale Kapazität K₁ des elektrischen Speichers 3 ist. P_{E} kann kleiner oder gleich der maximalen Ladeleistung P_{L1max} sein. Die erste elektrische Maschine 5 stellt die Antriebsleistung P_{A1} unter Entnahme elektrischer Energie aus dem elektrischen Speicher 3 zur Verfügung, mit der die Zugmaschine 200 angetrieben wird.

Die zweite elektrische Maschine 11 stellt die Antriebsleistung P_{A2} unter Entnahme elektrischer Energie aus dem zweiten elektrischen Speicher 9 zur Verfügung, wobei die Antriebsleistung P_{A2} kleiner oder gleich der maximalen Antriebsleistung P_{A2max} der zweiten elektrischen Maschine 11 ist. Mittels dieser Antriebsenergie P_{A2} wird der Anhänger 300 angetrieben, sodass die Gesamtantriebsleistung P_{AG} des Nutzfahrzeug-Gespanns 100 gleich P_{A1}+P_{A2} ist.

Wenn in einem Umschaltzeitpunkt tu, vgl. Fig. 2 bis Fig. 6, von dem Normalbetriebsmodus N in den Rekuperationsmodus R umgeschaltet wird, wenn das Nutzfahrzeug-Gespann 100 beispielsweise eine Gefällestrecke hinabfährt und/oder eine Bremsung durchgeführt wird, werden die elektrischen Maschinen 5, 11 als Generatoren angesteuert. Dieser Vorgang ist als regeneratives Bremsen oder Rekuperation bekannt. In diesem Rekuperationsmodus R erzeugt die erste elektrische Maschine 5 elektrische Energie bei einer Rekuperationsleistung P_{R1} und führt sie dem ersten elektrischen Speicher 3 zu, während die zweite elektrische Maschine 11 die von ihr bereitgestellte Rekuperationsleistung P_{R2} dem zweiten elektrischen Speicher 9 zur Verfügung stellt.

Während des Betriebs des Nutzfahrzeug-Gespanns 100, sowohl im Normalbetriebsmodus N als auch im Rekuperationsmodus R, ermittelt die Brennstoffzellensteuerung 7 die vorstehend beschriebenen Betriebsparameter B von den elektrischen Speichern 3, 9 und den elektrischen Maschinen 5, 11 und passt die Erzeugungsleistung P_{E} des Brennstoffzellensystems 1 als Funktion der Betriebsparameter B an.

Beispielsweise: Je mehr Rekuperationsleistung P_{R1} von der ersten elektrischen Maschine 5 bereitgestellt werden kann, desto weiter kann die Erzeugungsleistung P_{E} abgesenkt werden, um dennoch den ersten elektrischen Speicher 3 auf einem ausreichenden Ladestand L₁ zum Betrieb des Nutzfahrzeug-Gespanns 100 zu halten. Zudem wird von der zweiten elektrischen Maschine 11 über die Betriebsparameter B der Anteil an die Brennstoffzellensteuerung 7 gemeldet, mit dem der Anhänger 300 sich am Vortrieb des Nutzfahrzeug-Gespanns 100 im Normalbetriebsmodus N beteiligt, bzw. mit welchem Anteil der Anhänger 300 im Rekuperationsmodus R sich an der Rückgewinnung von Energie über die Rekuperationsleistung P_{R2} beteiligt.

Einige Betriebsparameter B des Anhängers 300 sind nicht im laufenden Betrieb ermittelbar, sondern betreffen charakteristische Betriebsgrößen, die für die elektrische Maschine 11 und den elektrischen Speicher 9 des Anhängers 300 charakteristisch sind, beispielsweise die Kapazität K₂ des im Anhänger 300 verbauten zweiten elektrischen Speichers 9, aber optional auch die maximale Ladeleistung P_{L2max} des zweiten Speichers 9 oder die maximale Antriebsleistung P_{A2max} der zweiten elektrischen Maschine 11. Diese Betriebsparameter können als feste parametrische Werte im Anhänger 300 hinterlegt werden und der Brennstoffzellensteuerung 7 beispielsweise über Datenaustausch übertragen werden. Die Informationselemente können aber beispielsweise auch einem Informationselement 21 zugeordnet sein, welches beispielsweise als RFID-Element im Kupplungsbereich des Anhängers 300 zur Zugmaschine 200 hin angeordnet ist, oder in Form eines oder mehrerer Barcodes, die am Anhänger 300 platziert sind und beim Anschließen des Anhängers 300 an die Zugmaschine 200 eingelesen werden.

Die Brennstoffzellensteuerung 7 steuert das Brennstoffzellensystem 1 vorzugsweise zusätzlich mittels einer Betriebsstrategie S(t) entlang eines zeitlichen Verlaufs (t), wobei die Betriebsstrategie S(t) weiter vorzugsweise eine Vorhersage der Antriebsleistung und/oder der Rekuperationsleistung entlang des zeitlichen Verlaufs beinhaltet. Die Betriebsstrategie S(t) umfasst ferner vorzugsweise entlang des zeitlichen Verlaufs (t) eine Vorhersage der Ladestände L₁, L₂ der elektrischen Speicher 3, 9. Die Brennstoffzellensteuerung 7 ermittelt für den Betrieb des Nutzfahrzeug-Gespanns 100 entweder vorab oder kontinuierlich während des Normalbetriebsmodus N und/oder des Rekuperationsmodus R Streckeninformationen T, von der Fahrzeugsteuerung 8, beispielsweise von einem Flottenmanagementsystem der Zugmaschine 200 oder von einem topographischen Navigationssystem, und passt die Erzeugungsleistung P_{E} zusätzlich zu der Berücksichtigung der Betriebsparameter B in Abhängigkeit der ermittelten Streckeninformationen T an.

Die Brennstoffzellensteuerung 7 fragt die Betriebsparameter B: Gesamtkapazität K_{G} = K₁ + K₂; und/oder maximale Ladeleistung P_{Lmax} = P_{L1max} + P_{L2max} entweder unmittelbar von den elektrischen Speichern 3, 9 ab und/oder mittels Abfrage von dem Batteriemanagementsystem 15.

Die Gesamtkapazität K_{G}, die Gesamtantriebsleistung P_{AG}, und/oder die Gesamtrekuperationsleistung P_{RG} kann von der Brennstoffzellensteuerung 7 berechnet werden oder separat berechnet werden, beispielsweise von der Bremssteuerung 17 oder dem Batteriemanagementsystem 15, und mittels Datenübertragung an die Brennstoffzellensteuerung 7 übermittelt werden.

Nachfolgend wird auf einen besonderen Verfahrensaspekt anhand der Figuren 2 bis 6 näher eingegangen.

In Fig. 2 ist der Betrieb eines Nutzfahrzeugs gemäß dem Stand der Technik schematisch dargestellt. Das Nutzfahrzeug gemäß dem Stand der Technik weist ein Brennstoffzellensystem auf, das mit einer konstanten Erzeugungsleistung P_{E} von etwa 90 kW betrieben wird. Diese Leistung ist in etwa nötig, um ein vollbeladenes Nutzfahrzeug-Gespann von ca. 40 Tonnen auf ebener Strecke bei einer Geschwindigkeit von ca. 80 km/h zu bewegen. Es wird exemplarisch davon ausgegangen, dass der elektrische Speicher des Nutzfahrzeugs des Standes der Technik eine Antriebsbatterie mit einer Kapazität von 120 kWh aufweist. Bei einer Laderate von 1,5 C könnte jene Batterie mit einer maximalen Ladeleistung P_{Lmax} von 180 kW geladen werden. Weil aber das Brennstoffzellensystem bereits konstant mit einer Leistung von 90 kW Erzeugungsleistung P_{E} Energie in den elektrischen Speicher einbringt, steht für eine Rekuperation, die an einem Umschaltzeitpunkt tu beginnt, nur die Differenz zwischen der maximalen Ladeleistung P_{Lmax} und der Erzeugungsleistung P_{E} als Rekuperationsleistung P_{R} zur Verfügung, also 90 kW.

Die Erfindung setzt demgegenüber auf ein Anpassen der Erzeugungsleistung P_{E}. Übertragen auf ein generisches Setup, zunächst ohne Unterscheidung in Zugmaschine und Anhänger, dargestellt in Fig. 3, wird zu einem Umschaltzeitpunkt tu von dem Normalbetriebsmodus N in den Rekuperationsmodus R gewechselt, und die Batterie des Nutzfahrzeugs bis zum Erreichen der maximalen Ladeleistung P_{Lmax} zusätzlich zu der Erzeugungsleistung P_{E} mit Rekuperationsleistung P_{R} mit elektrischer Energie versorgt. Solange P_{E} auf 90 kW unverändert gehalten wird, kann eine höhere Rekuperationsleistung als 90 kW nicht erreicht werden. Nach Ablauf einer Verzögerungsdauer t₁ von ca. einer halben Sekunde nach dem Umschaltzeitpunkt tu wird aber das Brennstoffzellensystem dazu angesteuert, die Erzeugungsleistung P_{E} zu senken. Hierdurch kann die Rekuperationsleistung P_{R} weiter gesteigert werden.

Im idealisierten Beispiel der Fig. 3 und in den nachfolgenden Figuren ist die Erzeugungsleistung P_{E} jeweils bis auf 0 abgesenkt, was einem Abschalten des Brennstoffzellensystems gleichkommen würde. In praktischen Anwendungsfällen wird vorzugsweise die Leistung P_{E} auf einem für das Verschleißverhalten und die Lebensdauer des Brennstoffzellensystems günstigen reduzierten Leistungsniveau größer 0 eingeregelt. Prinzipiell ist aber auch ein vollständiges Abschalten des Brennstoffzellensystems und mithin ein Absenken von P_{E} auf 0 möglich.

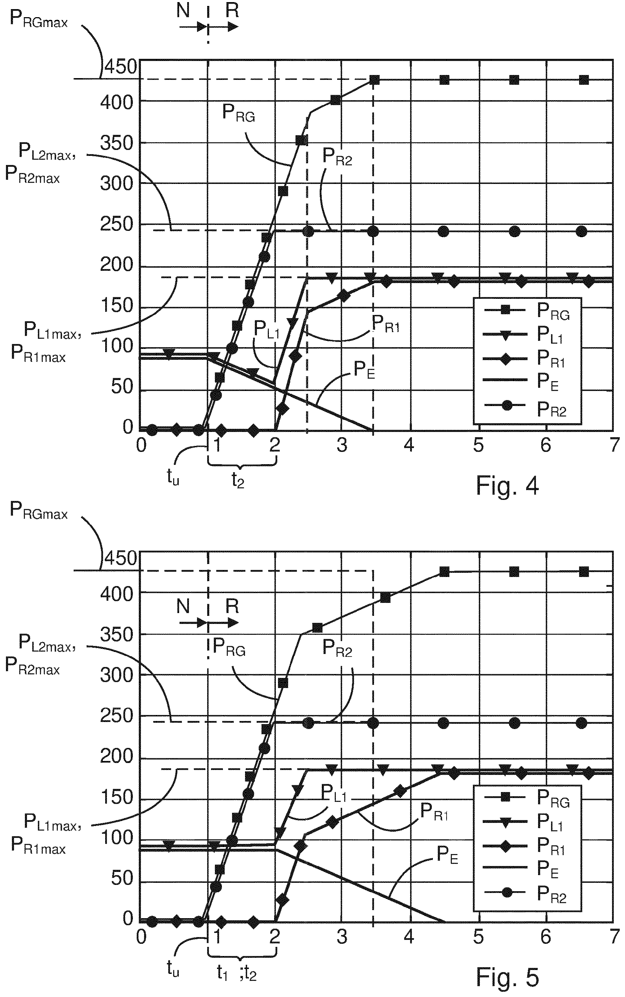

Das grundsätzliche in Fig. 3 dargestellte Konzept wird in Fig. 4 detaillierter mit Hinzunahme einer Visualisierung des Betriebs beider elektrischer Speicher 3, 9 des Nutzfahrzeug-Gespanns 100 gemäß Fig. 1 gezeigt. Der zweite elektrische Speicher 9 des Anhängers 300 weist beispielsweise eine Kapazität K₂ von 40 kWh bei einer C-Rate von 6 C auf, was eine maximale Ladeleistung des zweiten elektrischen Speichers 9 von 240 kW zur Folge hat (P_{L2max}). Das Nutzfahrzeug-Gespann 100 könnte in diesem Ausführungsbeispiel also mit von der zweiten elektrischen Maschine 11 eine maximale Rekuperationsleistung P_{R2max} gleicher Höhe aufnehmen, und folglich eine Gesamtrekuperationsleistung P_{RGmax} von 330 kW, wenn man das Brennstoffzellensystem 1 konstant bei P_{E} = 90 kW betreiben würde. Durch Anpassen der Erzeugungsleistung P_{E} wird aber auch hier die maximal abschöpfbare Rekuperationsleistung P_{RGmax} noch wie folgt optimiert: Es wird wie in Fig. 3 im Zeitpunkt tu vom Normalbetriebsmodus N in den Rekuperationsmodus R gewechselt. Die zweite elektrische Maschine 11 beginnt im Zeitpunkt tu sofort mit der Rekuperation und stellt die Rekuperationsleistung P_{R2} zur Verfügung.

Nach einer Zeitdauer t₂ beginnt auch die erste elektrische Maschine 5, die Rekuperationsleistung P_{R1} zur Verfügung zu stellen. Das Brennstoffzellensystem 1 wird bereits ab dem Zeitpunkt tu so angesteuert, dass die Erzeugungsleistung P_{E} (schonend) heruntergefahren wird. Somit kann bereits nach Verstreichen der Zeitdauer t₂ eine größere Rekuperationsleistung P_{R1} durch die erste elektrische Maschine 5 bereitgestellt werden, als bei Ausschöpfung der maximalen Ladeleistung P_{L1max} der ersten elektrischen Maschine 5 möglich wäre, wenn PE nicht heruntergefahren worden wäre. Auf diese Weise wird sukzessive die maximal erzielbare Gesamtrekuperationsleistung P_{RGmax} optimiert.

Wie sich aus dem Vergleich der vorstehenden Figuren bereits zeigt, ist es für ein maximales Ausschöpfen des Rekuperationspotenzials des Nutzfahrzeug-Gespanns 100 vorteilhaft, die Erzeugungsleistung P_{E} im Rahmen der Betriebsstrategie S(t) so früh wie möglich bei einem bekannten bevorstehenden Umschaltzeitpunkt tu zu reduzieren, d. h. auch durchaus schon vor dem Umschaltzeitpunkt tu.

Die Erfindung ist aber auch dann vorteilhaft, wenn die Erzeugungsleistung P_{E} erst nach dem Umschaltzeitpunkt tu heruntergefahren wird, wie Fig. 5 exemplarisch veranschaulicht.

In dem in Fig. 5 diagrammatisch skizzierten Verfahrensablauf wird im Normalbetriebsmodus N das Brennstoffzellensystem 1 dazu angesteuert, eine konstante Erzeugungsleistung P_{E} bereitzustellen, wobei P_{E} unterhalb der maximalen Ladeleistung P_{L1max} des ersten elektrischen Speichers 3 liegt. Im Umschaltzeitpunkt tu wird in den Rekuperationsmodus R gewechselt, und im gleichen Zeitpunkt beginnt die zweite elektrische Maschine 9, die Rekuperationsleistung P_{R2} bereitzustellen. Mit einer Verzögerungsdauer in einem Zeitraum t₁ nach dem Umschaltzeitpunkt tu wird sodann das Brennstoffzellensystem 1 dazu angesteuert, die Erzeugungsleistung P_{E} herunterzufahren. Im selben Zeitpunkt beginnt die erste elektrische Maschine 5, die Rekuperationsleistung P_{R1} bereitzustellen. Der Anstieg der Rekuperationsleistung P_{R1} wird in dem Moment verlangsamt, in welchem die Ladeleistung P_{L1} ihr Maximum P_{L1max} erreicht, steigt aber aufgrund der fortgesetzten Anpassung der Erzeugungsleistung P_{E} weiter an, bis auch in diesem Ausführungsbeispiel schließlich das maximale Gesamtrekuperationspotenzial P_{RGmax} nach einigen Sekunden voll ausgeschöpft werden kann. Wie im Ausführungsbeispiel der Fig. 4 liegt ein Zeitraum t₂ zwischen dem Beginn der Rekuperation durch die zweite elektrische Maschine 11 und die erste elektrische Maschine 5.

Für den Fall, dass trotz des vollen Ausschöpfens einer maximalen Rekuperationsleistung P_{RGmax}=P_{R1max}+P_{R2max} über einen Verzögerungsvorgang im Rekuperationsmodus R noch zusätzliche Bremswirkung vonnöten ist, kann nach dem vollen Ausschöpfen der Rekuperationspotenziale zusätzlich der Retarder 19 von der Fahrzeugsteuerung 8 bzw. Bremssteuerung 17 angesteuert werden, und falls auch das zum Verzögern des Nutzfahrzeug-Gespanns 100 nicht ausreicht, können im Anschluss daran zusätzlich die Reibbremsen angesteuert werden.

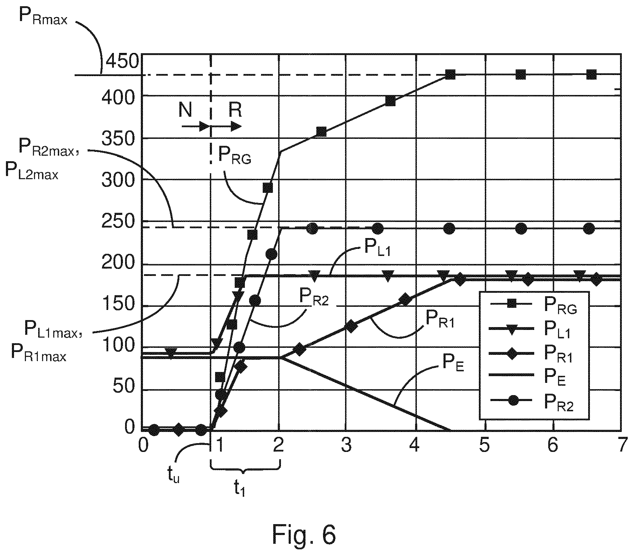

Im Unterschied zum Ausführungsbeispiel gemäß Fig. 5 wird in dem exemplarischen Verfahrensablauf gemäß Fig. 6 nicht kaskadiert mit dem Rekuperieren ab dem Umschaltzeitpunkt tu begonnen, sondern simultan im Umschaltzeitpunkt tu, sodass im Vergleich zu Fig. 5 der Anstieg der Gesamtrekuperationsleistung P_{RG} steiler verläuft als in der Variante gemäß Fig. 5. Das Herunterregeln der Erzeugungsleistung P_{E} beginnt innerhalb des Zeitraums der Verzögerungsdauer t₁ nach dem Umschaltzeitpunkt, vorliegend etwa 1 Sekunde. Die Abschwächung des Anstiegs der Gesamtrekuperationsleistung P_{RG} setzt früher ein und der Verlauf ist dann etwas flacher als im Verfahrensablauf gemäß Fig. 5, aber schlussendlich wird dieselbe maximale Gesamtrekuperationsleistung P_{RGmax} wie in Fig. 5 erreicht.

Wie sich aus dem Vorstehenden ergibt, führt die Anmeldung der Prinzipien der Erfindung zu einer gesunkenen Erzeugungsleistung P_{E} und damit zu einem niedrigeren Reaktantenverbrauch im Betrieb des Brennstoffzellensystems 1. Zudem wird durch dieses verbesserte Ausschöpfen der Rekuperationspotenziale der elektrischen Maschinen der Energie im Betrieb des Nutzfahrzeug-Gespanns 100 rückgewonnen, und der Verschleiß der Reibbremsen des Nutzfahrzeug-Gespanns 100 kann gesenkt werden.

### BEZUGSZEICHENLISTE (TEIL DER BESCHREIBUNG)

- 1: Brennstoffzellensystem
- 3: erster elektrischer Speicher
- 5: erste elektrische Maschine
- 7: Brennstoffzellensteuerung
- 8: Fahrzeugsteuerung
- 9: zweiter elektrischer Speicher
- 11: zweite elektrische Maschine
- 15: Batteriemanagementsystem
- 17: Bremsensteuerung
- 19: Retarder
- 21: Informationselement
- 100: Nutzfahrzeug-Gespann
- 200: Zugmaschine
- 300: Anhänger
- B: Betriebsparameter
- K₁, K₂: Kapazität erster/zweiter elektrischer Speicher
- K_{G}: Gesamtkapazität
- L₁, L₂: Ladestand erster/zweiter elektrischer Speicher
- N: Normalbetriebsmodus
- P_{A1}, P_{A2}: Antriebsleistung erste/zweite elektrische Maschine
- P_{A1max}, P_{A2max}: maximale Antriebsleistung erste/zweite el. Maschine
- P_{AG}: Gesamtantriebsleistung
- P_{B1max}, P_{B2max}: maximale Bremsleistung erste/zweite elektrische Maschine
- P_{E}: Erzeugungsleistung (Brennstoffzellensystem)
- P_{L1max}, P_{L2max}: maximale Ladeleistung, erster elektrischer Speicher
- P_{R}, (P_{R1}, P_{R2}): Rekuperationsleistung,(erster/zweiter elektrischer Speicher)
- P_{R1max}, P_{R2max}: maximale Rekuperationsleistung, erste/zweite el. Maschine
- P_{RG}: Gesamtrekuperationsleistung
- P_{RGmax}: maximale Gesamtrekuperationsleistung
- R: Rekuperationsmodus
- S(t): Betriebsstrategie
- T: Streckeninformationen
- (t): zeitlicher Verlauf
- tu: Umschaltzeitpunkt

## Patentansprüche

1. Verfahren zum Betrieb eines Nutzfahrzeug-Gespanns (100) mit
- einer Zugmaschine (200), welche eine erste elektrische Maschine (5), einen damit wirkverbundenen ersten elektrischen Speicher (3), und ein Brennstoffzellensystem (1) aufweist, das mit dem ersten elektrischen Speicher (3) wirkverbunden und dazu eingerichtet ist, elektrische Energie bei einer Erzeugungsleistung (P_{E}) bereitzustellen,
- einem Anhänger (300), welcher eine zweite elektrische Maschine (11) und einen damit wirkverbundenen zweiten elektrischen Speicher (9) aufweist, wobei das Verfahren die Schritte umfasst:
- Ermitteln von Betriebsparametern (B) der ersten elektrischen Maschine (5) und der zweiten elektrischen Maschine (11) und von Betriebsparametern (B) des ersten elektrischen Speichers (3) und/oder des zweiten elektrischen Speichers (9); und das Verfahren **gekennzeichnet durch** die Schritte:
- Anpassen der Erzeugungsleistung (P_{E}) des Brennstoffzellensystems (1) als Funktion mehrerer oder sämtlicher der ermittelten Betriebsparameter (B),
- Bereitstellen der Erzeugungsleistung (P_{E}) mittels des Brennstoffzellensystems (1), sowie
a) Antreiben des Nutzfahrzeug-Gespanns (100) in einem Normalbetriebsmodus (N) unter Entnahme elektrischer Energie bei einer Antriebsleistung (P_{A1}, P_{A2}) aus dem ersten elektrischen Speicher (3) und/oder dem zweiten elektrischen Speicher (9), und/oder
b) Bereitstellen elektrischer Energie bei einer Rekuperationsleistung (P_{R1}, P_{R2}) mittels der ersten elektrischen Maschine (5) und/oder der zweiten elektrischen Maschine (11), und Zuführen der Energie zu dem ersten elektrischen Speicher (3) und/oder dem zweiten elektrischen Speicher (9) in einem Rekuperationsmodus (R).

2. Verfahren nach Anspruch 1,
wobei die Betriebsparameter (B) eines, mehrere oder sämtliche der Folgenden umfassen:
i) Gesamtkapazität (K_{G}) des ersten elektrischen Speichers (3) und des zweiten elektrischen Speichers (9),
ii) Gesamtladestand (L_{G}) des ersten elektrischen Speichers (3) und des zweiten elektrischen Speichers (9),
iii) Gesamtantriebsleistung (P_{AG}) der ersten elektrischen Maschine (5) und der zweiten elektrischen Maschine (11),
iv) Gesamtrekuperationsleistung (P_{RG}) der ersten elektrischen Maschine (5) und der zweiten elektrischen Maschine (11),
v) maximale erste Antriebsleistung (P_{A1max}) der ersten elektrischen Maschine (5),
vi) maximale zweite Antriebsleistung (P_{A2max}) der zweiten elektrischen Maschine (11),
vii) maximale erste Rekuperationsleistung (P_{R1max}) der ersten elektrischen Maschine (5),
iix) maximale zweite Rekuperationsleistung (P_{R2max}) der zweiten elektrischen Maschine (11),
ix) maximale erste Ladeleistung (P_{L1max}) des ersten elektrischen Speichers (3),
x) maximale zweite Ladeleistung (P_{L2max}) des zweiten elektrischen Speichers (9),
xi) maximale erste Bremsleistung (P_{B1max}) der ersten elektrischen Maschine (5) und/oder
xii) maximale zweite Bremsleistung (P_{B2max}) der zweiten elektrischen Maschine (11).

3. Verfahren nach einem der vorstehenden Ansprüche,
wobei das Anpassen der Erzeugungsleistung (P_{E}) gemäß einer Betriebsstrategie S(t) erfolgt, wobei die Betriebsstrategie S(t) einen zeitlichen Verlauf (t) aufweist.

4. Verfahren nach Anspruch 3,
wobei die Betriebsstrategie S(t) entlang des zeitlichen Verlaufs (t) eine Vorhersage der Antriebsleistung (P_{AG}, P_{A1}, P_{A2}) und/oder der Rekuperationsleistung (P_{RG}, P_{R1}, P_{R2}) aufweist.

5. Verfahren nach einem der Ansprüche 3 oder4,
wobei die Betriebsstrategie S(t) entlang des zeitlichen Verlaufs (t) eine Vorhersage des Ladestandes (L₁) des ersten elektrischen Speichers (3) und/oder des Ladestandes (L₂) des zweiten elektrischen Speichers (9) aufweist, insbesondere eine Vorhersage über entlang des zeitlichen Verlaufs (t) auftretende Veränderungen des Ladestands (L₁) des ersten elektrischen Speichers (3) und/oder des Ladestands (L₂) des zweiten elektrischen Speichers (9).

6. Verfahren nach einem der Ansprüche 3 bis 5,
umfassend die Schritte:
- Ermitteln von Streckeninformationen (T) entlang des zeitlichen Verlaufs (t), und
- Anpassen der Erzeugungsleistung (P_{E}) zusätzlich in Abhängigkeit der ermittelten Streckeninformationen (T).

7. Verfahren nach einem der vorstehenden Ansprüche,
wobei das Ermitteln der Betriebsparameter (B) Gesamtkapazität (K_{G}), Gesamtladestand (L_{G}) und/oder maximal mögliche Ladeleistung (P_{L1max}, P_{L2max}) des ersten und/oder zweiten elektrischen Speichers (3, 9), mittels Abfrage eines Batteriemanagementsystems (15) erfolgt und die Betriebsparameter (B) an eine Brennstoffzellensteuerung (7, 17) des Brennstoffzellensystems (1) übertragen werden.

8. Verfahren nach einem der vorstehenden Ansprüche,
wobei das Ermitteln der Betriebsparameter (B) Gesamtkapazität (K_{G}) des ersten elektrischen Speichers und des zweiten elektrischen Speichers (3, 9), maximale Antriebsleistung (P_{A1max}) der ersten elektrischen Maschine (5) und/oder maximale Antriebsleistung (P_{A2max}) der zweiten elektrischen Maschine (11), und/oder maximale Rekuperationsleistung (P_{R1max}, P_{R2max}) der ersten und/oder zweiten elektrischen Maschine (5, 11) mittels Lesen von Informationselementen (21) am Nutzfahrzeug-Gespann (100) erfolgt.

9. Verfahren nach einem der vorstehenden Ansprüche,
wobei die Gesamtkapazität (K_{G}) des ersten und zweiten elektrischen Speichers (3, 9),
und/oder die Gesamtrekuperationsleistung (P_{RG}) der ersten elektrischen Maschine (5) und der zweiten elektrischen Maschine (11), von einer Brennstoffzellensteuerung (7, 17) berechnet wird.

10. Verfahren nach einem der vorstehenden Ansprüche 3 bis 9, umfassend:
- Wechseln von dem Normalbetriebsmodus (N) in den Rekuperationsmodus (R) zu einem Umschaltzeitpunkt (tu), und
- Herunterfahren der Erzeugungsleistung (P_{E}) vor dem Umschaltzeitpunkt (tu), in dem Umschaltzeitpunkt (tu) oder innerhalb einer vorbestimmten ersten Verzögerungsdauer (t₁) nach dem Umschaltzeitpunkt (tu).

11. Verfahren nach Anspruch 10,
wobei die Erzeugungsleistung (P_{E}) derart gesteuert wird, dass der Gesamtladestand (L_{G}) des ersten und zweiten elektrischen Speichers (3, 9) zum Umschaltzeitpunkt (tu) unterhalb der Gesamtkapazität (K_{G}) liegt.

12. Verfahren nach Anspruch 11,
wobei ab dem Umschaltzeitpunkt (tu) zunächst für eine zweite Verzögerungsdauer (t₂) nur mit der zweiten elektrischen Maschine (11) Rekuperationsleistung (P_{R2}) bereitgestellt wird, und insbesondere dem zweiten elektrischen Speicher (9) zugeführt wird, und erst im Anschluss daran mit der ersten elektrischen Maschine (5) Rekuperationsleistung (P_{R1}) bereitgestellt wird, und insbesondere dem ersten elektrischen Speicher (3) zugeführt wird.

13. Verfahren nach Anspruch 11 oder 12,
wobei die zweite Verzögerungsdauer (t₂) ab dem Umschaltzeitpunkt (tu), in welchem zunächst nur mit der zweiten elektrischen Maschine (11) Rekuperationsleistung (P_{R2}) bereitgestellt wird, in einem Bereich von 5,0 s oder weniger liegt, vorzugsweise in einem Bereich von 2,0 s oder weniger.

14. Verfahren nach einem der Ansprüche 10 bis 13,
wobei das Nutzfahrzeug-Gespann (100) einen Retarder (19) aufweist, und im Rekuperationsmodus (R) ab dem Umschaltzeitpunkt (tu) zunächst nur mit der ersten elektrischen Maschine (5) und/oder der zweiten elektrischen Maschine (5, 11) Rekuperationsleistung (P_{R1}, P_{R2}) bereitgestellt wird, und erst im Anschluss der Retarder (19) betätigt wird.

15. Verfahren nach einem der Ansprüche 3 bis 9,
wobei das Nutzfahrzeug-Gespann (100) einen Retarder (19) aufweist, und ein Herunterfahren der Erzeugungsleistung (P_{E}) mittels des Brennstoffzellensystems (1) mit Aktivierung des Retarders (19) initiiert wird.

16. Nutzfahrzeug-Gespann (100) mit
einer Zugmaschine (200), welche eine erste elektrische Maschine (5) und einen damit wirkverbundenen ersten elektrischen Speicher (3) aufweist,
einem Anhänger (300), welcher eine zweite elektrische Maschine (11) und einen damit wirkverbundenen zweiten elektrischen Speicher (9) aufweist, und einem an der Zugmaschine (200) angeordneten Brennstoffzellensystem (1), das mit dem ersten elektrischen Speicher (3) wirkverbunden und dazu eingerichtet ist, elektrische Energie bei einer Erzeugungsleistung (P_{E}) bereitzustellen,
wobei die erste und zweite elektrische Maschine (5, 11) dazu eingerichtet sind, das Nutzfahrzeug-Gespann (100) in einem Normalbetriebsmodus (N) unter Entnahme elektrischer Energie bei einer Antriebsleistung (P_{A1}, P_{A2}) aus den ersten und/oder zweiten elektrischen Speichern (3, 9) anzutreiben, und
in einem Rekuperationsmodus (R) elektrische Energie bei einer Rekuperationsleistung (P_{R1}, P_{R2}) bereitzustellen und dem ersten und/oder zweiten elektrischen Speicher (3, 9) zuzuführen;
das Nutzfahrzeug-Gespann (100) **dadurch gekennzeichnet, dass** es eine Fahrzeugsteuerung (8) aufweist, die signalleitend mit den elektrischen Maschinen (5, 11) und den elektrischen Speichern (3, 9) verbunden und dazu eingerichtet ist, das Verfahren nach einem der vorstehenden Ansprüche auszuführen.

## Claims

1. Method for operating a commercial vehicle combination (100) comprising
- a tractor (200) having a first electric machine (5), a first electric storage device (3) operatively connected thereto, and a fuel cell system (1) which is operatively connected to the first electric storage device (3) and configured to provide electrical energy at a generation power (P_{E}),
- a trailer (300) having a second electric machine (11) and a second electric storage device (9) operatively connected thereto, wherein the method comprises the steps of:
- determining operating parameters (B) of the first electric machine (5) and the second electric machine (11) and determining operating parameters (B) of the first electric storage device (3) and/or the second electric storage device (9); and the method **characterized by** the steps of:
- adjusting the generation power (P_{E}) of the fuel cell system (1) as a function of a plurality of or all of the determined operating parameters (B),
- providing the generation power (P_{E}) by means of the fuel cell system (1), and
a) driving the commercial vehicle combination (100) in a normal operating mode (N) by drawing electrical energy at a drive power (P_{A1}, P_{A2}) from the first electric storage device (3) and/or the second electric storage device (9), and/or
b) providing electrical energy at a recuperation power (P_{R1}, P_{R2}) by means of the first electric machine (5) and/or the second electric machine (11), and supplying the energy to the first electric storage device (3) and/or the second electric storage device (9) in a recuperation mode (R).

2. Method according to claim 1,
wherein the operating parameters (B) comprise one, a plurality of or all of the following:
i) total capacity (K_{G}) of the first electric storage device (3) and of the second electric storage device (9),
ii) total charge level (L_{G}) of the first electric storage device (3) and of the second electric storage device (9),
iii) total drive power (P_{AG}) of the first electric machine (5) and of the second electric machine (11),
iv) total recuperation power (P_{RG}) of the first electric machine (5) and of the second electric machine (11),
v) maximum first drive power (P_{A1max}) of the first electric machine (5),
vi) maximum second drive power (P_{A2max}) of the second electric machine (11),
vii) maximum first recuperation power (P_{R1max}) of the first electric machine (5),
iix) maximum second recuperation power (P _{R2max}) of the second electric machine (11),
ix) maximum first charging power (P_{L1max}) of the first electric storage device (3),
x) maximum second charging power (P_{L2max}) of the second electric storage device (9),
xi) maximum first braking power (P_{B1max}) of the first electric machine (5), and/or
xii) maximum second braking power (P_{B2max}) of the second electric machine (11).

3. Method according to either of the preceding claims,
wherein the generation power (P_{E}) is adjusted according to an operating strategy S(t), wherein the operating strategy S(t) has a temporal profile (t).

4. Method according to claim 3,
wherein the operating strategy S(t) has a prediction of the drive power (P_{AG}, P_{A1}, P_{A2}) and/or of the recuperation power (P_{RG}, P_{R1}, P_{R2}) along the temporal profile (t).

5. Method according to either of claims 3 or 4,
wherein the operating strategy S(t) has a prediction of the charge level (L₁) of the first electric storage device (3) and/or of the charge level (L₂) of the second electric storage device (9) along the temporal profile (t), in particular a prediction of changes of the charge level (L₁) of the first electric storage device (3) and/or of the charge level (L₂) of the second electric storage device (9) occurring along the temporal profile (t).

6. Method according to any of claims 3 to 5,
comprising the steps of:
- determining route information (T) along the temporal profile (t),
and
- adjusting the generation power (P_{E}) additionally depending on the determined route information (T).

7. Method according to any of the preceding claims,
wherein the operating parameters (B) total capacity (K_{G}), total charge level (L_{G}) and/or maximum possible charging power (P_{L1max}, P_{L2max}) of the first and/or the second electric storage device (3, 9) are determined by querying a battery management system (15), and the operating parameters (B) are transmitted to a fuel cell control unit (7, 17) of the fuel cell system (1).

8. Method according to any of the preceding claims,
wherein the operating parameters (B) total capacity (K_{G}) of the first electric storage device and of the second electric storage device (3, 9), maximum drive power (P_{A1max}) of the first electric machine (5) and/or maximum drive power (P_{A2max}) of the second electric machine (11),
and/or maximum recuperation power (P_{R1max}, P_{R2max}) of the first and/or the second electric machine (5, 11) are determined by reading information elements (21) on the commercial vehicle combination (100).

9. Method according to any of the preceding claims,
wherein the total capacity (K_{G}) of the first and the second electric storage (3, 9),
and/or the total recuperation power (P_{RG}) of the first electric machine (5) and the second electric machine (11) is calculated by a fuel cell control unit (7, 17).

10. Method according to any of the preceding claims 3 to 9, comprising:
- switching from normal operating mode (N) to recuperation mode (R) at a switching time (tu), and
- shutting down generation power (P_{E}) before the switching time (tu), at the switching time (tu) or within a predetermined initial delay period (t₁) after the switching time (tu).

11. Method according to claim 10,
wherein the generation power (P_{E}) is controlled such that the total charge level (L_{G}) of the first and the second electric storage device (3, 9) is below the total capacity (K_{G}) at the switching time (tu).

12. Method according to claim 11,
wherein, from the switching time (tu), recuperation power (P_{R2}) is initially provided by only the second electric machine (11) for a second delay period (t₂) and in particular supplied to the second electric storage device (9), and only subsequently is recuperation power (P_{R1}) provided by the first electric machine (5) and in particular supplied to the first electric storage device (3).

13. Method according to claim 11 or 12,
wherein the second delay duration (t₂) from the switching time (tu), in which recuperation power (P_{R2}) is initially provided by only the second electric machine (11), is in a range of 5.0 s or less, preferably in a range of 2.0 s or less.

14. Method according to any of claims 10 to 13,
wherein the commercial vehicle combination (100) has a retarder (19), and in recuperation mode (R), from the switching time (tu), recuperation power (P_{R1}, P_{R2}) is initially provided by only the first electric machine (5) and/or the second electric machine (5, 11), and only subsequently is the retarder (19) activated.

15. Method according to any of claims 3 to 9,
wherein the commercial vehicle combination (100) has a retarder (19), and a shutdown of the generation power (P_{E}) is initiated by means of the fuel cell system (1) by activating the retarder (19).

16. Commercial vehicle combination (100) comprising
a tractor (200) having a first electric machine (5) and a first electric storage device (3) operatively connected thereto, a trailer (300) having a second electric machine (11) and a second electric storage device (9) operatively connected thereto, and a fuel cell system (1) arranged on the tractor (200), which is operatively connected to the first electric storage device (3) and is configured to provide electrical energy at a generation power (P_{E}),
wherein the first and the second electric machine (5, 11) are configured to drive the commercial vehicle combination (100) in a normal operating mode (N) by drawing electrical energy at a drive power (P_{A1}, P_{A2}) from the first and/or the second electric storage device (3, 9), and
in a recuperation mode (R), to provide electrical energy at a recuperation power (P_{R1}, P_{R2}) and to supply electrical energy to the first and/or the second electric storage device (3, 9);
the commercial vehicle combination (100) **characterized in that** it has a vehicle control unit (8), which is connected in a signal-conducting manner to the electric machines (5, 11) and the electric storage devices (3, 9), and is configured to carry out the method according to any of the preceding claims.

## Revendications

1. Procédé permettant de faire fonctionner un attelage de véhicule utilitaire (100) comportant
- un véhicule tracteur (200) qui présente une première machine électrique (5), un premier accumulateur électrique (3) connecté de manière fonctionnelle à celle-ci, et un système de piles à combustible (1) connecté de manière fonctionnelle au premier accumulateur électrique (3) et configuré pour fournir de l'énergie électrique à une puissance de production (P_{E}),
- une remorque (300) qui présente une seconde machine électrique (11) et un second accumulateur électrique (9) connecté de manière fonctionnelle à celle-ci, dans lequel le procédé comprend les étapes consistant à :
- déterminer des paramètres de fonctionnement (B) de la première machine électrique (5) et de la seconde machine électrique (11) et des paramètres de fonctionnement (B) du premier accumulateur électrique (3) et/ou du second accumulateur électrique (9) ; et le procédé étant **caractérisé par** les étapes consistant à :
- adapter la puissance de production (P_{E}) du système de piles à combustible (1) en fonction de plusieurs ou de la totalité des paramètres de fonctionnement (B) déterminés,
- fournir la puissance de production (P_{E}) au moyen du système de piles à combustible (1), et
a) entraîner l'attelage de véhicule utilitaire (100) dans un mode de fonctionnement normal (N) en prélevant de l'énergie électrique à une puissance d'entraînement (P_{A1}, P_{A2}) du premier accumulateur électrique (3) et/ou du second accumulateur électrique (9), et/ou
b) fournir de l'énergie électrique à une puissance de récupération (P_{R1}, P_{R2}) au moyen de la première machine électrique (5) et/ou de la seconde machine électrique (11), et acheminer l'énergie au premier accumulateur électrique (3) et/ou au second accumulateur électrique (9) dans un mode de récupération (R).

2. Procédé selon la revendication 1,
dans lequel les paramètres de fonctionnement (B) comprennent un, plusieurs ou la totalité des éléments suivants :
i) capacité totale (K_{G}) du premier accumulateur électrique (3) et du second accumulateur électrique (9),
ii) niveau de charge total (L_{G}) du premier accumulateur électrique (3) et du second accumulateur électrique (9),
iii) puissance d'entraînement totale (P_{AG}) de la première machine électrique (5) et de la seconde machine électrique (11),
iv) puissance de récupération totale (P_{RG}) de la première machine électrique (5) et de la seconde machine électrique (11),
v) première puissance d'entraînement maximale (P_{A1max}) de la première machine électrique (5),
vi) seconde puissance d'entraînement maximale (P_{A2max}) de la seconde machine électrique (11),
vii) première puissance de récupération maximale (P_{R1max}) de la première machine électrique (5),
iix) seconde puissance de récupération maximale (P_{R2max}) de la seconde machine électrique (11),
ix) première puissance de charge maximale (P_{L1max}) du premier accumulateur électrique (3),
x) seconde puissance de charge maximale (P_{L2max}) du second accumulateur électrique (9),
xi) première puissance de freinage maximale (P_{B1max}) de la première machine électrique (5) et/ou
xii) seconde puissance de freinage maximale (P_{B2max}) de la seconde machine électrique (11).

3. Procédé selon l'une des revendications précédentes,
dans lequel l'adaptation de la puissance de production (P_{E}) est effectuée selon une stratégie de fonctionnement S(t), dans lequel la stratégie de fonctionnement S(t) présente une évolution temporelle (t).

4. Procédé selon la revendication 3,
dans lequel la stratégie de fonctionnement S(t) présente, le long de l'évolution temporelle (t), une prévision de la puissance d'entraînement (P_{AG}, P_{A1}, P_{A2}) et/ou de la puissance de récupération (P_{RG}, P_{R1}, P_{R2}).

5. Procédé selon l'une des revendications 3 ou 4,
dans lequel la stratégie de fonctionnement S(t) présente, le long de l'évolution temporelle (t), une prévision de l'état de charge (L₁) du premier accumulateur électrique (3) et/ou de l'état de charge (L₂) du second accumulateur électrique (9), en particulier une prévision des modifications de l'état de charge (L₁) du premier accumulateur électrique (3) et/ou de l'état de charge (L₂) du second accumulateur électrique (9), lesquelles modifications surviennent le long de l'évolution temporelle (t).

6. Procédé selon l'une des revendications 3 à 5, comprenant les étapes consistant à :
- déterminer des informations de trajet (T) le long de l'évolution temporelle (t), et
- adapter la puissance de production (P_{E}) en outre en fonction des informations de trajet (T) déterminées.

7. Procédé selon l'une des revendications précédentes,
dans lequel la détermination des paramètres de fonctionnement (B), de la capacité totale (K_{G}), de l'état de charge total (L_{G}) et/ou de la puissance de charge maximale (P_{L1max}, P_{L2max}) possible du premier et/ou du second accumulateur électrique (3, 9) est effectuée au moyen d'une interrogation d'un système de gestion de batterie (15) et les paramètres de fonctionnement (B) sont transmis à une commande de piles à combustible (7, 17) du système de piles à combustible (1).

8. Procédé selon l'une des revendications précédentes,
dans lequel la détermination des paramètres de fonctionnement (B), de la capacité totale (K_{G}) du premier accumulateur électrique et du second accumulateur électrique (3, 9), de la puissance d'entraînement maximale (P_{A1max}) de la première machine électrique (5) et/ou de la puissance d'entraînement maximale (P_{A2max}) de la seconde machine électrique (11),
et/ou de la puissance de récupération maximale (P_{R1max}, P_{R2max}) de la première et/ou de la seconde machine électrique (5, 11) est effectuée au moyen de la lecture d'éléments d'informations (21) sur l'attelage de véhicule utilitaire (100).

9. Procédé selon l'une des revendications précédentes,
dans lequel la capacité totale (K_{G}) du premier et du second accumulateur électrique (3, 9), et/ou la puissance de récupération totale (P_{RG}) de la première machine électrique (5) et de la seconde machine électrique (11), sont calculées par une commande de piles à combustible (7, 17).

10. Procédé selon l'une des revendications 3 à 9 précédentes, comprenant :
- le passage du mode de fonctionnement normal (N) au mode de récupération (R) à un moment de commutation (tu), et
- la diminution de la puissance de production (P_{E}) avant le moment de commutation (tu), au moment de commutation (tu) ou pendant une première période de temporisation (t₁) prédéterminée après le moment de commutation (tu).

11. Procédé selon la revendication 10,
dans lequel la puissance de production (P_{E}) est commandée de telle sorte que le niveau de charge total (L_{G}) du premier et du second accumulateur électrique (3, 9) est inférieur à la capacité totale (K_{G}) au moment de commutation (tu).

12. Procédé selon la revendication 11,
dans lequel, à partir du moment de commutation (tu), une puissance de récupération (P_{R2}) est d'abord fournie pendant une seconde période de temporisation (t₂) uniquement avec la seconde machine électrique (11), et est en particulier acheminée au second accumulateur électrique (9), et une puissance de récupération (P_{R1}) n'est fournie qu'ensuite avec la première machine électrique (5), et est en particulier acheminée au premier accumulateur électrique (3).

13. Procédé selon la revendication 11 ou 12,
dans lequel la seconde durée de temporisation (t₂) à partir du moment de commutation (tu), lors duquel une puissance de récupération (P_{R2}) est d'abord fournie uniquement avec la seconde machine électrique (11), se situe dans une plage de 5,0 s ou moins, de préférence dans une plage de 2,0 s ou moins.

14. Procédé selon l'une des revendications 10 à 13,
dans lequel l'attelage de véhicule utilitaire (100) présente un ralentisseur (19), et, dans le mode de récupération (R), à partir du moment de commutation (tu), la puissance de récupération (P_{R1}, P_{R2}) est d'abord fournie uniquement avec la première machine électrique (5) et/ou la seconde machine électrique (5, 11), et le ralentisseur (19) n'est actionné qu'ensuite.

15. Procédé selon l'une des revendications 3 à 9,
dans lequel l'attelage de véhicule utilitaire (100) présente un ralentisseur (19), et une diminution de la puissance de production (P_{E}) est initiée au moyen du système de piles à combustible (1) avec l'activation du ralentisseur (19).

16. Attelage de véhicule utilitaire (100) comportant
un véhicule tracteur (200) qui présente une première machine électrique (5) et un premier accumulateur électrique (3) connecté de manière fonctionnelle à celle-ci, une remorque (300) qui présente une seconde machine électrique (11) et un second accumulateur électrique (9) connecté de manière fonctionnelle à celle-ci, et un système de piles à combustible (1) disposé sur le véhicule tracteur (200) et connecté de manière fonctionnelle au premier accumulateur électrique (3) et configuré pour fournir de l'énergie électrique à une puissance de production (P_{E}),
dans lequel les première et seconde machines électriques (5, 11) sont configurées pour entraîner l'attelage de véhicule utilitaire (100) dans un mode de fonctionnement normal (N) en prélevant de l'énergie électrique à une puissance d'entraînement (P_{A1}, P_{A2}) des premier et/ou second accumulateurs électriques (3, 9), et
pour, dans un mode de récupération (R), fournir de l'énergie électrique à une puissance de récupération (P_{R1}, P_{R2}) et l'acheminer aux premier et/ou second accumulateurs électriques (3, 9) ;
l'attelage de véhicule utilitaire (100) est **caractérisé en ce qu'il** présente une commande de véhicule (8) qui est connectée par conduction de signaux aux machines électriques (5, 11) et aux accumulateurs électriques (3, 9) et qui est configurée pour mettre en oeuvre le procédé selon l'une des revendications précédentes.
